# EUROPÄISCHE PATENTSCHRIFT

(11) **EP 3 279 027 B1**
(45) Veröffentlichungstag und Bekanntmachung des Hinweises auf die Patenterteilung: **24.07.2019**
(21) Anmeldenummer: 17184504.3
(22) Anmeldetag: 02.08.2017
(51) Int. Cl.: B60M 1/26, B60M 1/28

(54) **ANORDNUNG MIT EINER NETZWERKVORRICHTUNG, DIE ZUR BEFESTIGUNG AN EINEM FAHRDRAHT EINER STROMDURCHFLOSSENEN OBERLEITUNG AUSGEBILDET IST**
ARRANGEMENT WITH A NETWORK DEVICE THAT IS DESIGNED FOR FIXING TO A CONTACT WIRE OF A CURRENT-CARRYING OVERHEAD WIRE
AMÉNAGEMENT DOTÉ D'UN DISPOSITIF DE RÉSEAU QUI EST CONÇU POUR ÊTRE FIXÉ SUR UNE LIGNE AÉRIENNE D'UNE LIGNE AÉRIENNE DE CONTACT PARCOURUE PAR DU COURANT

(30) Priorität: 03.08.2016 DE 102016114322
(43) Veröffentlichungstag der Anmeldung: 07.02.2018
(73) Patentinhaber: Powerlines Products GmbH, 2120 Wolkersdorf im Weinviertel (AT)
(72) Erfinder: Fischer, Michael, 1210 Wien (AT)
(74) Vertreter: Patentanwälte Bressel und Partner mbB

(56) Entgegenhaltungen:
- WO-A1-2010/042442
- WO-A2-2012/129350
- DE-A1-102007 031 126
- DE-A1-102010 045 462
- DE-C5-102011 103 951
- WEI WANG ET AL: "Optimization Design of an Inductive Energy Harvesting Device for Wireless Power Supply System Overhead High-Voltage Power Lines", ENERGIES, Bd. 9, Nr. 4, 26. März 2016 (2016-03-26), Seite 242, XP055433611, DOI: 10.3390/en9040242

## Beschreibung

Die vorliegende Erfindung betrifft eine Anordnung mit einer Netzwerkvorrichtung, wobei die Netzwerkvorrichtung zur Befestigung an einem Fahrdraht einer stromdurchflossenen Oberleitung ausgebildet ist. Die Erfindung betrifft ferner ein Verfahren zum Betreiben einer solchen Anordnung.

Oberleitungen dienen der elektrischen Versorgung von Triebfahrzeugen mit Wechsel- oder Gleichstrom. Gleisgebundene Triebfahrzeuge, beispielsweise Straßenbahnen werden im Nahbahnnetz meist mit Gleichspannung versorgt, während beispielsweise Lokomotiven im Fernbahnnetz auf Grund der geringeren Verluste mit Wechselspannung betrieben werden.

Oberleitungen sind extremen mechanischen, thermischen und anderen meteorologischen Einflüssen ausgesetzt, die die ordnungsgemäße elektrische Versorgung der Triebfahrzeuge zumindest beeinträchtigen können. Bei höheren Fahrzeuggeschwindigkeiten werden Oberleitungen mitunter in stärkere mechanische Schwingungen versetzt, da etwaige Unebenheiten des Schienennetzes und die resultierende Fahrzeugdynamik über den Pantographen auf die Oberleitung übertragen werden. Dieses Problem ist bei nicht nachgespannten Oberleitungen noch ausgeprägter. Derartige Schwingungen und weitere Effekte können dazu führen, dass der Stromabnehmer den Kontakt zur Oberleitung verliert oder diese im schlimmsten Fall sogar abreißt. Deshalb ist es u.a. unerlässlich, den Zustand der Oberleitung in regelmäßigen Intervallen zu überprüfen. Ein weiterer Grund für eine Überprüfung der Oberleitung ist die Tatsache, dass der Fahrdraht während des Betriebes der Fahrzeuge insbesondere deshalb abgenutzt wird, weil die Stromabnehmer in Kontakt mit dem Fahrdraht bewegt werden und dabei Material abtragen.

Zur Überwachung des Zustandes der Oberleitung werden herkömmlich Sensoren eingesetzt, die beispielsweise den Durchhängegrad, d. h. die mechanische Spannung in der Oberleitung, erfassen. Ebenso können Sensoren vorgesehen sein, die den Abriss der Oberleitung und die Temperatur an spezifischen Stellen entlang der Oberleitung erfassen. Diese Sensorsignale werden herkömmlich entweder drahtgebunden oder drahtlos an einen meist neben den Schienen in einem Schaltschrank auf dem Boden bzw. Untergrund montierten Transceiver (Sende- und Empfangseinheit) weitergeleitet. Der Transceiver leitet diese Sensorsignale sodann weiter an eine Leitstelle, wo diese von Mitarbeitern der Bahn sodann ausgewertet werden.

EP 2 403 746 B1 offenbart ein Netzwerk mit einer Vielzahl von Funksensorknoten zur Überwachung von Betriebsparametern einer Fahrleitungsanlage. Die Funksensorknoten sind an jedem Fahrleitungsmast der Fahrleitungsanlage installiert. Mit Hilfe verschiedener Sensoren werden Daten der Fahrleitungsanlage erfasst und aus den Daten Fehlertelegramme erstellt, die dann drahtlos an eine Zentrale der Fahrleitungsanlage weitergeleitet werden.

Für drahtgebundene Netzwerke ist ein hoher Verkabelungsaufwand notwendig, da sowohl für die Sensoren als auch für die bodenstationierten Transceiver separate Datenleitungen und Stromleitungen zur Verfügung gestellt werden müssen. Bei drahtlosen Netzwerken ist die Signalübertragung über die Strecke zwischen den installierten Sensoren nicht immer ungehindert.

WEI WANG ET AL: "Optimization Design of an Inductive Energy Harvesting Device for Wireless Power Supply System Overhead High Voltage Power Lines", ENERGIES, Bd. 9, Nr. 4, 242, 26. März 2016, beschreibt eine induktive Energiegewinnungseinrichtung für elektrische Leitungen, welche zum Transport von elektrischer Energie dienen. Die Energiegewinnungseinrichtung weist einen ringförmigen Magnetkern auf, der die jeweilige elektrische Leitung um läuft.

DE 10 2011 103 951 C5 beschreibt eine Sensoranordnung zur Feststellung von Unregelmäßigkeiten in oder an Fahrstromleitungen für schienengebundene Fahrzeuge.

WO 2012/129350 beschreibt eine Vorrichtung zum Gewinnen von Energie von einem schwingenden Substrat.

WO 2010/042442 A1 beschreibt ein Stromleitungsüberwachungsgerät, das an einer Stromleitung montiert ist. Die Vorrichtung umfasst eine Schaltung zum Überwachen der Stromleitung und zum Übermitteln von Informationen bezüglich der Stromleitung. DE 10 2010 045 462 A1 beschreibt eine Anordnung zum Übertragen von Daten von und/oder zu einem Streckenelement des spurgebundenen Verkehrs. Die Anordnung umfasst neben dem Streckenelement eine im Bereich eines elektrischen Fahrstromleiters angeordnete Speise-Einrichtung und eine kommunikationstechnisch an das Streckenelement angebundene Übertragungs-Einrichtung zum drahtlosen Übertragen der Daten zu und/oder von der Speise-Einrichtung. Die Speise-Einrichtung ist zum drahtlosen Übertragen der Daten von und/oder zu dem Streckenelement sowie zum Ein- und/oder Ausspeisen der Daten in den beziehungsweise aus dem elektrischen Fahrstromleiter ausgebildet. Zum leitungsunabhängigen, autarken Versorgen des Streckenelementes mit elektrischer Energie ist eine Energieversorgungs-Einrichtung vorgesehen. Dabei kann es sich um eine Energieversorgungs-Einrichtung zum drahtlosen Empfangen von aus dem elektrischen Fahrstromleiter ausgekoppelter, induktiv übertragener Energie handeln.

Eine Aufgabe der vorliegenden Erfindung besteht darin, die bezüglich des Standes der Technik vorhandenen Nachteile zumindest teilweise zu beseitigen oder zumindest abzumildern und eine Anordnung mit einer Netzwerkvorrichtung zur Verfügung zu stellen, bei der insbesondere die Abnutzung des Fahrdrahts auf einfache Weise feststellbar ist. Eine weitere Aufgabe der vorliegenden Erfindung besteht darin, ein entsprechendes Betriebsverfahren anzugeben.

Es werden eine Netzwerkvorrichtung, eine Anordnung mit einer solchen Netzwerkvorrichtung und ein Betriebsverfahren angegeben.

Die Netzwerkvorrichtung reduziert den Montageaufwand und verbessert die Signalübertragung. Da die Netzwerkvorrichtung über mindestens eine induktive Energiegewinnungseinrichtung verfügt, die beim bestimmungsgemäßen Gebrauch der Netzwerkvorrichtung relativ zu der Oberleitung so angeordnet und ausgebildet ist, dass aus der induzierten Spannung und dem daraus resultierenden Induktionsstrom Energie für den elektrischen Betrieb der Netzwerkvorrichtung gewinnbar ist, ist auch der Aufwand für das Betreiben der Netzwerkvorrichtung gering.

Gemäß den unabhängigen Ansprüchen weist die Netzwerkvorrichtung zumindest zwei der induktiven Energiegewinnungseinrichtungen auf, wobei die zumindest zwei induktiven Energiegewinnungseinrichtungen beim bestimmungsgemäßen Gebrauch der Netzwerkvorrichtung an unterschiedlichen Positionen bezüglich einer Umfangsposition um die Oberleitung angeordnet sind und/oder unterschiedliche wirksame Querschnittsflächen, insbesondere unterschiedlich große wirksame Querschnittsfläche, aufweisen. Unter der wirksamen Querschnittsfläche wird eine Fläche verstanden, durch die Magnetfeldlinien des von der Oberleitung (hier dem Fahrdraht) erzeugten Magnetfeldes hindurch treten. Daher sind die zumindest zwei induktiven Energiegewinnungseinrichtungen ausgestaltet, von Magnetfeldlinien eines Magnetfeldes durchsetzt zu werden, das von dem durch den Fahrdraht fließenden elektrischen Strom verursacht wird.

Die in den Energiegewinnungseinrichtungen induzierte elektrische Spannung hängt vom Ort, der Form, der Größe und der Ausrichtung der Energiegewinnungseinrichtung ab. Selbst bei gleicher Form und Größe der zumindest zwei Energiegewinnungseinrichtungen wird im Allgemeinen nicht dieselbe elektrische Spannung in ihnen induziert, da sich die Energiegewinnungseinrichtungen an unterschiedlichen Orten in Umfangsrichtung (bezogen auf den Fahrdraht) befinden. Lediglich in speziellen Fällen, wie zum Beispiel bei der symmetrischen Anordnung der beiden Energiegewinnungseinrichtungen bezüglich einer vertikalen Symmetrieebene des Fahrdrahts und/oder bei einem in der Praxis nicht vorhandenen magnetischen Feld mit kreisförmigen Magnetfeldlinien, die in jeder Querschnittsebene des Fahrrades konzentrisch um den innerhalb des Fahrdrahts liegenden Mittelpunkt des Feldes verlaufen, könnte in zwei baugleiche Energiegewinnungseinrichtungen dieselbe elektrische Spannung induziert werden. Da es sich bei einem Fahrdraht aber üblicherweise nicht um einen im Querschnitt kreisförmigen elektrischen Leiter handelt, verlaufen auch die Magnetfeldlinien im Querschnitt nicht kreisförmig konzentrisch. Auch wird im Fall zweier baugleicher Energiegewinnungseinrichtungen eine Anordnung gewählt, bei der die Energiegewinnungseinrichtungen nicht bezüglich der vertikalen Symmetrieebene des Fahrdrahts symmetrisch angeordnet und ausgerichtet werden. Gemäß einem der in den Ansprüchen enthaltenen Fälle, werden die zumindest zwei Energiegewinnungseinrichtungen daher so angeordnet, dass das Magnetfeld des Fahrdrahts in ihnen unterschiedlich große elektrische Spannungen induziert.

Durch eine Positionierung der beiden Energiegewinnungseinrichtungen an unterschiedlichen Positionen in Umfangsrichtung kann somit erreicht werden, dass die in verschiedenen Bereichen in der Umgebung des Fahrdrahts unterschiedlich wirksamen Effekte der Abnutzung des Fahrdrahts auf das Magnetfeld gemessen werden können. Durch eine unterschiedliche Gestaltung der Querschnittsflächen der beiden Energiegewinnungseinrichtungen kann erreicht werden, dass selbst im Fall der Positionierung an derselben Position in Umfangsrichtung oder einer bezüglich der erwähnten Mittelebene symmetrischen Position die in der Umgebung des Fahrdrahts insbesondere mit zunehmendem Abstand zum Fahrdraht unterschiedlich wirksamen Effekte der Abnutzung des Fahrdrahts auf das Magnetfeld gemessen werden können.

In jedem Fall werden zumindest zwei der Energiegewinnungseinrichtungen so angeordnet, dass sich eine Abnutzung des Fahrdrahts in unterschiedlicher Weise auf die in den Energiegewinnungseinrichtungen induzierte Spannung auswirkt. Aufgrund der Abnutzung des Fahrdrahts ändert sich die Form des Fahrdrahts im Laufe der Zeit und damit auch die Feldstärkeverteilung des Magnetfeldes, d. h. der Verlauf der Magnetfeldlinien. Mit den zumindest zwei um den Fahrdraht angeordneten induktiven Energiegewinnungseinrichtungen kann daher eine Veränderung der Feldstärkeverteilung gemessen werden. Zum Beispiel das Verhältnis der beiden induzierten Spannungen verändert sich mit der Abnutzung des Fahrdrahts. Die Erfindung ist jedoch nicht auf die Bildung des Verhältnisses der beiden induzierten Spannungen beschränkt. Vielmehr kann jede Veränderung der induzierten Spannungen im Laufe der Zeit ausgewertet werden, um die Abnutzung des Fahrdrahts festzustellen und optional auch quantitativ zu bestimmen. Ein weiteres Beispiel für eine Auswertung besteht darin, die in einer der Energiegewinnungseinrichtungen induzierte Spannung zum Beispiel durch Division um einen entsprechenden Betrag auf einen entsprechenden Wert zu normieren und die andere induzierte Spannung durch denselben Betrag zu dividieren. Anschließend kann zum Beispiel die Abweichung der anderen, so normierten induzierten Spannung von einem früheren (z.B. ebenfalls so normierten) Wert oder fest vorgegebenen Vergleichswert ermittelt werden. Insbesondere werden die zumindest zwei Energiegewinnungseinrichtungen daher so angeordnet, dass eine Abnutzung des Fahrdrahts die von dem Magnetfeld des Fahrdrahts in ihnen induzierten elektrischen Spannungen unterschiedlich verändert.

Daher sind zwei der Energiegewinnungseinrichtungen so angeordnet, dass die Abnutzung bei gleich großem elektrischen Strom durch den Fahrdraht wie vor der Abnutzung zu einer größeren Änderung der induzierten Spannung in einer der Energiegewinnungseinrichtungen als in der anderen der Energiegewinnungseinrichtungen führt. Alternativ oder zusätzlich sind zwei der Energiegewinnungseinrichtungen so angeordnet, dass die Abnutzung bei gleich großem elektrischen Strom durch den Fahrdraht wie vor der Abnutzung zu einer größeren Differenz der induzierten Spannung in den zwei Energiegewinnungseinrichtungen führt.

Da sich die Stromstärke des durch den Fahrdraht fließenden Stromes ändern kann, wird es bevorzugt, dass eine zweite der Energiegewinnungseinrichtungen derart in der Nähe des Fahrdrahts angeordnet wird, dass eine Abnutzung des Fahrdrahts eine geringere Auswirkung auf die in der zweiten Energiegewinnungseinrichtung induzierte Spannung hat als auf die in einer ersten der Energiegewinnungseinrichtungen induzierte Spannung. Insbesondere kann daher die erste Energiegewinnungseinrichtung in Umfangsrichtung näher an der Unterseite des Fahrtdrahts (wo die Abnutzung stattfindet) angeordnet sein als die zweite Energiegewinnungseinrichtung. Zum Beispiel wird die zweite Energiegewinnungseinrichtung daher oberhalb des Fahrdrahts angeordnet, wo sich eine Abnutzung des Fahrdrahts nicht oder nur sehr geringfügig auf das Magnetfeld auswirkt. Insbesondere kann die Abnutzung des Fahrdrahts (bei gleich großer Stromstärke durch den Fahrdraht) zu einer Erhöhung der in der ersten Energiegewinnungseinrichtung induzierten Spannung führen. Alternativ oder zusätzlich kann die Abnutzung des Fahrdrahts (bei gleich großer Stromstärke durch den Fahrdraht) zu einer Erniedrigung der in der zweiten Energiegewinnungseinrichtung induzierten Spannung führen.

Insbesondere weist zumindest eine der Energiegewinnungseinrichtungen zumindest eine Spule auf, d. h. zumindest einen elektrischen Leiter der zumindest eine Windung um eine Querschnittsfläche der Spule aufweist. Falls die Energiegewinnungseinrichtung eine Mehrzahl von Spulen aufweist, können diese elektrisch in Reihe und/oder parallel zueinander geschaltet sein.

Es ist auch möglich, dass lediglich eine der Mehrzahl von Energiegewinnungseinrichtungen während des Betriebes der Anordnung elektrische Energie zum Betreiben von Einrichtungen der Anordnung liefert. Die andere Energiegewinnungseinrichtung kann in diesem Fall lediglich die induzierte Spannung erzeugen, die zum Zweck der Ermittlung der Abnutzung des Fahrdrahts ausgewertet wird. Diese Variante erlaubt es, eine der Energiegewinnungseinrichtungen so auszulegen, dass eine hohe elektrische Leistung für den Betrieb der Anordnung bereitgestellt und während des Betriebes auch zumindest zeitweise geliefert wird. Die andere Energiegewinnungseinrichtung kann so ausgelegt werden, dass zwar die induzierte Spannung gut messbar ist und gemeinsam mit der Auswertung der induzierten Spannung der ersten Energiegewinnungseinrichtung eine Bestimmung der Abnutzung des Fahrdrahts ermöglicht, jedoch keine hohe elektrische Leistung bereitgestellt werden muss. Insbesondere kann die andere Energiegewinnungseinrichtung die erste Energiegewinnungseinrichtung sein, welche beispielsweise in Umfangsrichtung näher an der Unterseite des Fahrdrahts angeordnet ist. Oberhalb des Fahrdrahts ist dagegen zum Beispiel die zweite Energiegewinnungseinrichtung angeordnet, welche eine Vielzahl von Windungen einer Spule aufweisen kann, sodass eine hohe elektrische Leistung bereitgestellt werden kann. Da die Netzwerkvorrichtung vorzugsweise an der typischerweise vorhandenen Einschüchterung des Fahrdrahts befestigt wird und sich Vorrichtungen grundsätzlich so an Fahrdrähten befestigen lassen, dass sie sich im Wesentlichen in dem Bereich oberhalb der Einführung des Fahrdrahts befinden, steht insbesondere oberhalb des Fahrdrahts verhältnismäßig viel Raum für Energiegewinnungseinrichtungen zur Verfügung, während in Umfangsrichtung näher an der Unterseite des Fahrdrahts weniger Raum zur Verfügung steht.

Zum Beispiel kann durch eine größere Anzahl von Windungen eines elektrischen Leiters einer Spule der ersten, der zweiten oder einer weiteren Energiegewinnungseinrichtung eine größere induzierten Spannung erreicht werden. Dies ist ein Auslegungskriterium, das bezüglich der Lieferung elektrische Energie an elektrische Verbraucher durch die Energiegewinnungseinrichtung zu berücksichtigen ist. Aber auch die Auswertung der Veränderung der induzierten elektrischen Spannung aufgrund einer Abnutzung des Fahrdrahts ist vereinfacht, wenn die jeweilige Spule eine größere Anzahl von Windungen des elektrischen Leiters aufweist.

Die induzierte Spannung ist insbesondere eine Wechselspannung, sodass die Größe der induzierten Spannung durch die Amplitude der Wechselspannung definiert ist.

Selbstverständlich kann es vorkommen, dass die Größe des elektrischen Stroms durch den Fahrdraht schwankt. Es wird daher bevorzugt, bei der Auswertung der Signale, die den induzierten Spannungen entsprechen, die Größe des elektrischen Stroms durch den Fahrdraht zu berücksichtigen. Zum Beispiel kann die Größe des elektrischen Stroms mittels eines zusätzlichen Sensors gemessen werden (der Teil der Netzwerkvorrichtung sein kann). Ferner alternativ oder zusätzlich kann die jeweilige induzierte Spannung durch den Betrag (insbesondere der Amplitude) des elektrischen Stroms, insbesondere des gemessenen elektrischen Stroms durch den Fahrdraht dividiert werden, um die induzierten Spannungen für verschiedene Abnutzungsgrade besser vergleichen zu können.

Die zumindest zwei Energiegewinnungseinrichtungen sind so orientiert, dass sie von magnetischen Feldlinien, die um den Fahrdraht herum verlaufen, durchsetzt werden und aus diesem Grund eine elektrische Spannung in der jeweiligen Energiegewinnungseinrichtung induziert wird. Eine Möglichkeit der Orientierung besteht darin, eine von zumindest einem elektrischen Leiter einer Spule (d. h. eines Ausführungsbeispiels einer Energiegewinnungseinrichtung) in zumindest einem Umlauf umlaufene Querschnittsfläche der Spule senkrecht zu einer Kreislinie (betrachtet in einer Querschnittsfläche des Fahrdrahts) um ein Zentrum des Fahrdrahts zu orientieren. Die Erfindung ist jedoch nicht darauf beschränkt, dass sich der gesamte elektrische Leiter oder gar alle elektrischen Leiter einer Spule im Wesentlichen in einer gemeinsamen Ebene oder parallel dazu erstrecken. Vielmehr kann sich der zumindest eine elektrische Leiter der Spule in seinem Verlauf nicht lediglich in Richtungen erstrecken, die alle durch Linearkombinationen von zwei der drei linear unabhängigen Raumrichtungen ausgedrückt werden können, sondern kann sich in seinem Verlauf in Richtungen erstrecken, deren Komponenten über den gesamten Verlauf betrachtet in allen drei linear unabhängigen Raumrichtungen verlaufen.

Insbesondere können die zumindest zwei induktiven Energiegewinnungseinrichtungen in einem gemeinsamen Längsabschnitt entlang des Fahrdrahts angeordnet sein. Dies erlaubt einen kompakten Aufbau der Anordnung der induktiven Energiegewinnungseinrichtungen. Die induktiven Energiegewinnungseinrichtungen befinden sich in diesem Fall in zumindest teilweise in Längsrichtung des Fahrdrahtes einander überlappenden Längsabschnitten.

Die Anordnung weist mindestens einen Transceiver auf, der ausgebildet ist, Signale von zumindest einem Sensor zu empfangen, der ausgestaltet ist Betriebs- und/oder Zustandsparameter der Oberleitung und/oder des/der der Oberleitung zugeordneten Schienenweges und/oder Straße zu erzeugen. Ferner ist der Transceiver ausgebildet Signale an einen weiteren Transceiver, der nicht oder nur optional Teil der Anordnung ist, zu senden. Der mindestens eine Transceiver der Anordnung ist elektrisch mit der mindestens einen induktiven Energiegewinnungseinrichtung verbunden und ist daher beim bestimmungsgemäßen Gebrauch der Anordnung mit Energie von der mindestens einen induktiven Energiegewinnungseinrichtung versorgbar. Der Transceiver kann Teil der Netzwerkvorrichtung sein, d. h. gemeinsam mit den zumindest zwei Energiegewinnungseinrichtungen an dem Fahrdraht befestigt sein, oder separat angeordnet sein, zum Beispiel am Tragseil der Oberleitung, und über eine elektrische Leitung mit zumindest einer der induktiven Energiegewinnungseinrichtungen der Netzwerkvorrichtung verbunden sein.

Ferner weist die Anordnung zumindest einen Zustandssensor oder eine Anordnung von Zustandssensoren auf, der/die elektrisch mit den zumindest zwei induktiven Energiegewinnungseinrichtungen verbunden ist und ausgebildet ist, Signale zu erzeugen, die jeweils einem elektrischen Betriebszustand der zumindest zwei induktiven Energiegewinnungseinrichtungen entsprechen. Diese Signale können insbesondere wie oben bereits beschrieben ausgewertet werden, um die Abnutzung des Fahrdrahts festzustellen und optional auch quantitativ zu bestimmen. Der Zustandssensor oder die Anordnung von Zustandssensoren können Teil der Netzwerkvorrichtung sein oder an einem anderen Ort angeordnet sein. Insbesondere können die erzeugten Signale über den zumindest einen Transceiver von der Netzwerkvorrichtung zu einer anderen Netzwerkvorrichtung und/oder zu einer Leitstelle übertragen werden, wo sich die Auswertungseinrichtung befindet. Daher kann der Zustandssensor oder die Anordnung von Zustandssensoren (insbesondere über eine unten beschriebene Auswertungseinrichtung und/oder Datenmanagementeinrichtung) mit dem Transceiver oder einem der Transceiver der Anordnung verbunden sein, sodass die Signale von dem Transceiver empfangbar sind.

Insbesondere kann die Anordnung auch die Auswertungseinrichtung aufweisen, die mit dem Zustandssensor oder der Anordnung von Zustandssensoren verbunden ist und ausgestaltet ist, aus den Signalen entsprechend den elektrischen Betriebszuständen der zumindest zwei induktiven Energiegewinnungseinrichtungen eine Zustandsgröße zu ermitteln, die einem Abnutzungszustand des Fahrdrahts der stromdurchflossenen Oberleitung entspricht. Insbesondere kann die Netzwerkvorrichtung die Auswertungseinrichtung aufweisen. In jedem Fall kann die Information über den Abnutzungszustand des Fahrdrahts von der Anordnung weiterverarbeitet und/oder weitergeleitet werden. Ein Ergebnis der Weiterverarbeitung kann es zum Beispiel sein, den Bedarf für ein Auswechseln des Fahrdrahts anzuzeigen und optional anzufordern.

Im Folgenden werden weitere Aspekte beschrieben, die ganz oder teilweise auch dann realisiert sein/werden können, wenn die Netzwerkvorrichtung lediglich eine einzige Energiegewinnungseinrichtung aufweist, oder die induzierte Spannung von keiner der Energiegewinnungseinrichtungen gemessen wird.

Gemäß einem Aspekt ist die Netzwerkvorrichtung ausgestaltet, insbesondere lösbar an einer stromdurchflossenen Oberleitung befestigt zu werden.

Vorzugsweise ist ein erster Transceiver an einem ersten längsseitigen Endabschnitt der Netzwerkvorrichtung angeordnet, und ein zweiter Transceiver ist an einem dem ersten Endabschnitt gegenüberliegenden zweiten längsseitigen Endabschnitt der Netzwerkvorrichtung angeordnet. Insbesondere die Auswertungseinrichtung kann als Teil der Netzwerkvorrichtung zwischen dem ersten und dem zweiten Transceiver angeordnet sein. Alternativ oder zusätzlich kann zwischen dem ersten und dem zweiten Transceiver eine Datenmanagementeinrichtung angeordnet sein, die von einem Micro-Controller gesteuert wird, der Signale von dem ersten Transceiver an den zweiten Transceiver weiterleitet. Optional kann die Datenmanagementeinrichtung auch die Auswertungseinrichtung sein oder diese aufweisen. Die Datenmanagementeinrichtung kann mindestens einen zweiten Sensor umfassen, dessen Signale dem Micro-Controller zugeführt werden. Der Begriff des Managements der Daten ist insbesondere allgemein zu verstehen, d. h. bereits die Verarbeitung und/oder die Weiterleitung von Daten und/oder die Einkopplung von Daten in den Datenübertragungsweg, der durch mehrere der Netzwerkverrichtungen gebildet wird, ist ein Management der Daten. Dementsprechend handelt es sich bereits dann um einen Micro-Controller, wenn dieser Daten verarbeitet. Es ist aber sehr verständlich nicht ausgeschlossen, dass die Datenmanagementeinrichtung und der Micro-Controller zusätzliche Aufgaben der Steuerung von Sensoren, der Steuerung der Datenübertragung zwischen verschiedenen Netzwerkvorrichtungen und/oder der Steuerung der Datenverarbeitung erfüllen.

Die Anordnung kann einen oder mehrere erste Sensoren aufweisen, der/die Betriebs- und/oder Zustandsparameter erzeugt/erzeugen und der/die nicht Teil der Netzwerkvorrichtung ist/sind. Insbesondere ist es möglich, diesen zumindest einen ersten Sensor mit der Netzwerkvorrichtung zu verbinden. Der zumindest eine erste Sensor kann an der Oberleitung befestigt und/oder im Bereich des Schienenweges oder Schienennetzes am Boden installiert sein.

Vorzugsweise ist der erste Sensor ausgewählt aus der Gruppe bestehend aus einem Temperatursensor, einem Beschleunigungssensor, einem Abstandssensor, einem Sensor, der die mechanische Spannung in der Oberleitung sensiert, einem Sensor zur Feststellung des Vereisungsgrades der Oberleitung, einem Weichenstellungssensor, einem Kollisionssensor, einem bildgebenden Sensor und einem optischen Sensor. Noch bevorzugter umfasst die Netzwerkvorrichtung des Weiteren eine Funkschnittstelle für den Funksignalaustausch zwischen dem Transceiver und Transceivern der ersten Sensoren.

Gemäß einer bevorzugten Ausführungsform der Erfindung weist die Datenmanagementeinrichtung an ihrer äußeren Oberfläche mindestens eine Sensorschnittstelle auf, über die sie Signale von dem ersten Sensor erhält und dem Micro-Controller zuführt, der wiederum die Signale an den ersten oder zweiten Transceiver weiterleitet. Optional kann die Sensorschnittstelle auch eine mechanische Schnittstelle zum Befestigen des ersten Sensors sein.

Vorteilhaft ist es, wenn die erwähnte Funkschnittstelle der Netzwerkvorrichtung und die Datenmanagementeinrichtung so eingerichtet sind, dass eine Fehlermeldung an eine weitere Netzwerkvorrichtung oder eine bodeninstallierte Schnittstelle automatisch weitergeleitet wird, wenn die ordnungsgemäße Funktionalität der Netzwerkvorrichtung nicht mehr gewährleistet ist.

Alternativ oder zusätzlich zu dem zumindest einen ersten Sensor kann die Anordnung einen oder mehrere zweite Sensoren aufweisen, der/die Betriebs- und/oder Zustandsparameter erzeugt/erzeugen und der/die Teil der Netzwerkvorrichtung ist/sind. Insbesondere kann der zumindest eine zweite Sensor ausgewählt sein aus der Gruppe bestehend aus einem Temperatursensor, einem Beschleunigungssensor, einem Abstandssensor, einem Kollisionssensor, einem bildgebenden Sensor und einem optischen Sensor.

Des Weiteren kann nach einer vorteilhaften Ausgestaltung der Erfindung die Netzwerkvorrichtung einen wieder aufladbaren Energiespeicher aufweisen, der von der induktiven Energiegewinnungseinrichtung mit Energie beaufschlagt werden kann. Vorzugsweise weist der wieder aufladbare Energiespeicher eine Kapazität auf, die für den elektrischen Betrieb der Netzwerkvorrichtung über einen vorbestimmten Zeitraum hinreichend ist. Weiterhin bevorzugt ist der wieder aufladbare Energiespeicher ein Akkumulator. Alternativ oder zusätzlich weist die Netzwerkvorrichtung zumindest eine Solarzelle oder zumindest ein Solarzellenmodul auf, die/das so ausgebildet ist, dass zusätzlich zu der induktiven Energiegewinnungseinrichtung Energie für den Betrieb der Anordnung liefern kann.

Insbesondere kann die Netzwerkvorrichtung modular aufgebaut sein dahingehend, dass der mindestens eine Transceiver und die zumindest zwei induktiven Energiegewinnungseinrichtungen lösbar mit einem Gehäuse der Netzwerkvorrichtung verbunden sind und durch entsprechende andere Netzwerkvorrichtungskomponenten ausgetauscht werden können. Weitere derartige Module der Netzwerkvorrichtung können zumindest ein zweiter Transceiver, die Datenmanagementeinrichtung, die zumindest eine Solarzelle oder das Solarzellenmodul und der wieder aufladbaren Energiespeicher sein.

Gemäß einer Ausführungsform der Erfindung kann die Netzwerkvorrichtung bestimmungsgemäß mit einer unter Wechselspannung oder Gleichspannung stehenden Oberleitung betrieben werden. Alternativ oder zusätzlich kann die Netzwerkvorrichtung Teil eines Systems mit einer Vielzahl von Netzwerkvorrichtungen sein.

Vorzugsweise ist in einem solchen System ein Abstand zwischen zwei entlang der Oberleitung aufeinanderfolgend befestigten Netzwerkvorrichtungen so gewählt, dass bei einem Ausfall einer dieser Netzwerkvorrichtungen die intakt gebliebene Netzwerkvorrichtung noch mit einer unmittelbar auf die ausgefallene Netzwerkvorrichtung folgende Netzwerkvorrichtung kommunizieren kann.

Ausführungsbeispiele der Erfindung werden nun unter Bezugnahme auf die beigefügte Zeichnung beschrieben. Die einzelnen Figuren der Zeichnung zeigen:
- Fig. 1: schematisch eine perspektivische Ansicht einer Netzwerkvorrichtung gemäß einer bevorzugten Ausführungsform der Erfindung, die an einer Oberleitung befestigt werden kann,
- Fig. 2: schematisch einen Querschnitt durch einen Fahrdraht und zwei als Spulen ausgestaltete Energiegewinnungseinrichtung in einem ersten Abnutzungszustand des Fahrdrahts,
- Fig. 3: schematisch einen Querschnitt durch die in Fig. 2 dargestellte Anordnung in einem zweiten Abnutzungszustand des Fahrdrahts,
- Fig. 4: schematisch einen Querschnitt durch die in Fig. 1 dargestellte Anordnung mit einer Netzwerkvorrichtung und einem Fahrdraht zur Verdeutlichung der Anordnung der ersten und der zweiten Energiegewinnungseinrichtung,
- Fig. 5: schematisch und vereinfacht eine Ausführungsform einer Spule, die oberhalb des Fahrdrahts angeordnet werden kann, und
- Fig. 6: schematisch eine Ausführungsform der erfindungsgemäßen Anordnung mit einer Netzwerkvorrichtung und einem Zustandssensor.

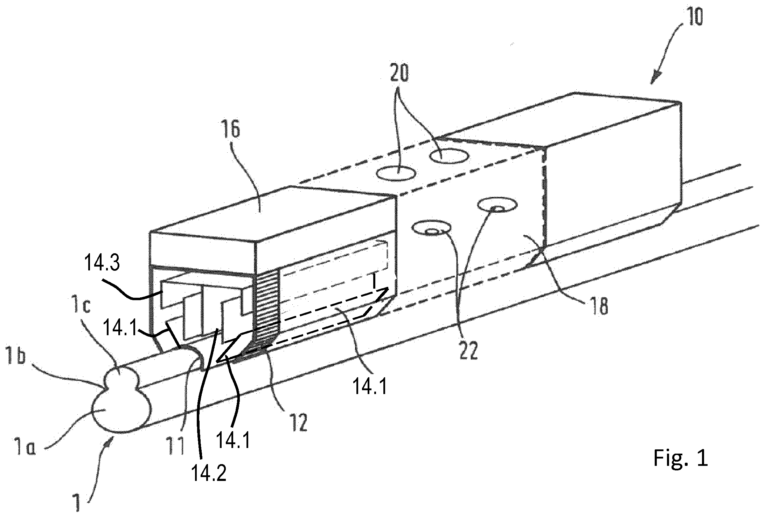

Als Oberleitung 1 (z. B. Fig. 1) im Sinne der vorliegenden Erfindung werden nicht nur Oberleitungen verstanden, die für den Antrieb von Schienenfahrzeugen, Straßenbahnen und Bussen im innerstädtischen Nahbetrieb als auch im Nahbahnnetz eingesetzt werden. Unter Oberleitung werden auch sogenannte Kettenwerke bzw. Kettenfahrleitungen verstanden, bei denen der Fahrdraht aus Stabilitätsgründen und zur Vergrößerung seines Leitungsquerschnittes an einem Tragseil abgehängt ist. Mit anderen Worten, unter Oberleitung im Sinne der Erfindung werden sämtliche stromführenden Leitungen bzw. Fahrleitungen verstanden, welche die elektrische Energie (Wechselspannung oder Gleichspannung) für den Antrieb des jeweils eingesetzten Triebfahrzeuges liefern, und zwar unabhängig davon, ob das Triebfahrzeug gleisgebunden ist oder nicht.

Wenn die erfindungsgemäße Netzwerkvorrichtung jedoch zur Ermittlung der Abnutzung eines Fahrdrahts verwendet wird, ist die Netzwerkvorrichtung an einem Fahrdraht angeordnet.

Je nach Schienennetz wird die Oberleitung mit Gleichspannung oder Wechselspannung beaufschlagt. Die vorliegende Erfindung ist für Oberleitungen geeignet, die sowohl mit Gleichspannung als auch mit Wechselspannung betrieben werden, wie dies aus den unten stehenden Erläuterungen ersichtlich werden wird. Größe der Gleichspannung und die Amplitude sowie die Frequenz der Wechselspannung kann/können je nach Land und Art des Schienennetzes allerdings unterschiedlich. So gibt es nicht nur länderspezifische Elektrifizierungen der Schienennetze, sondern auch innerhalb eines Landes werden die Schienennetze des Fern- und Nahbahnnetzwerkes mit unterschiedlichen Spannungen und Frequenzen betrieben.

Das Ausführungsbeispiel der in Fig. 1 dargestellten Netzwerkvorrichtung 10 wird über eine kraft- und/oder formschlüssige Verbindung mit der Oberleitung 1 mechanisch verbunden. Herkömmliche Oberleitungen 1 weisen diametral gegenüberliegende konkave, z.B. V-förmige Ausnehmungen 1b auf, in die entsprechend ausgebildete Backen 11 der Netzwerkvorrichtung 10 kraft- und/oder formschlüssig aufgenommen werden können. Im Querschnitt betrachtet, unterteilen die konkaven Ausnehmungen 1b die Oberleitung 1 in einen unteren Abschnitt 1a, an dessen Unterseite der Pantograph eines Triebfahrzeuges entlang gleitet, und einen oberen Abschnitt 1c, der beispielweise bei einem Kettenwerk mit dem Tragseil verbunden ist. Bei der konkret in Fig. 1 dargestellten Oberleitung handelt es sich um einen Fahrdraht.

Die Netzwerkvorrichtung 10 weist drei Energiegewinnungseinrichtungen 14.1, 14.2, 14.3 auf, die auch als sog. "Energy Harvester" bezeichnet werden können. Die Energiegewinnungseinrichtungen 14.1, 14.2, 14.3 weisen jeweils eine Vielzahl von Windungen zumindest einer Spule auf, die von den um die Oberleitung 1 verlaufenden geschlossenen Magnetfeldlinien, dem Wirbelfeld durchsetzt werden. Liegt an der Oberleitung 1 eine Wechselspannung an, erzeugt das sich zeitlich ändernde elektrische Feld einen sich mit gleicher Frequenz ändernden magnetischen Fluss in den Spulen, woraus eine Induktionsspannung resultiert, die für die Energieversorgung sämtlicher elektrischer Komponenten bzw. Module der Netzwerkvorrichtung 10 sorgen kann. Durch den konzentrischen Verlauf der geschlossenen Magnetfeldlinien durch die Wicklungen und den Wicklungskern der Spulen wird eine Induktionsspannung in der Energiegewinnungseinrichtung 14 erzeugt.

Im Fall einer Kettenfahrleitung, bei der auch ein stromdurchflossenes Tragseil zur Verfügung steht, können die Wicklungen und Spulen der Energiegewinnungseinrichtung das Tragseil vollständig konzentrisch umfassen, um die größte Ausnutzung des Wirbelfelds sicherzustellen. Die vollständige konzentrische Anordnung ist beim Tragseil im Gegensatz zum Fahrdraht deswegen möglich, da der Pantograph den Kontakt zum Fahrdraht und nicht zum Tragseil im Betrieb sicherstellen muss.

Aber selbst in dem Fall, in dem die Oberleitung 1 mit einer Gleichspannung beaufschlagt wird, erzeugen die sich aus dem Betrieb ergebenden Oberwellenanteile der Gleichspannung eine induzierte Spannung in den Energiegewinnungseinrichtungen 14.1, 14.2. Dies liegt meist daran, dass der mitunter stark pulsierende Gleichstromverbraucher oder -erzeuger in der Oberleitung 1 einen Gleichstromanteil und einen Wechselstromanteil generieren. Die Welligkeit der Gleichspannung stellt sich dann als der Mittelwert der Gleichspannung mit einer überlagerten sinusförmigen Wechselspannung mit der einfachen, doppelten, usw. Frequenz der gleichgerichteten Wechselspannung dar.

Vorzugsweise ist die Netzwerkvorrichtung 10 spiegelbildlich in Bezug auf eine Querschnittsebene aufgebaut, welche die Netzwerkvorrichtung 10 in Längsrichtung, d. h. in Verlaufsrichtung der Oberleitung 1 mittig schneidet. Zur Einfachheit der Darstellung sind in der Figur lediglich im linken Teil Details der Netzwerkvorrichtung 10 gezeichnet.

Zumindest an einem längsseitigen Ende oder in einem Endbereich bzw. Endabschnitt derselben weist die Netzwerkvorrichtung 10 einen Transceiver 12 auf. Zusätzlich zur Energiegewinnungseinrichtung 14 ist vorzugsweise darüber hinaus ein Akkumulator 16 vorgesehen, der vorzugsweise auf der Oberseite der Netzwerkvorrichtung 10 angeordnet ist. Des Weiteren weist die Netzwerkvorrichtung 10 eine Datenmanagementeinrichtung 18 auf, die vorzugsweise von einem nicht dargestellten Micro-Controller gesteuert wird. An der äußeren Oberfläche der Datenmanagementeinrichtung können vorzugsweise Schnittstellen 22 sowie (zweite) Sensoren 20 vorgesehen sein. Sowohl die Schnittstellen 22 als auch die Sensoren 20 sind vorzugsweise über den Micro-Controller mit dem Transceiver 12 verbunden. Die Sensorsignalschnittstellen 22 können elektronische, elektrische, optische oder auch mechanische Sensorsignalschnittstellen sein.

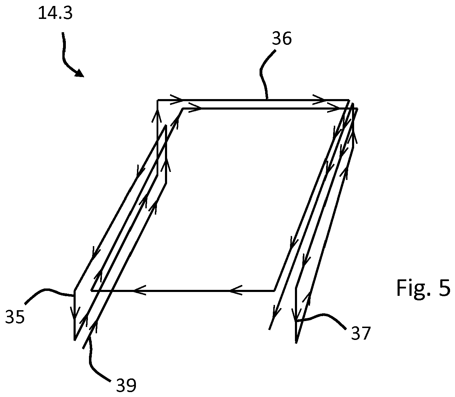

Anstelle der Datenmanagementeinrichtung 18 oder als Teil der Datenmanagementeinrichtung 18 kann/können zumindest ein Zustandssensor und/oder eine Auswertungseinrichtung vorhanden sein. Auf einen Zustandssensor 31 und eine Auswertungseinrichtung 33 wird noch anhand der schematischen Darstellung von Fig. 5 eingegangen.

Zusätzlich kann die Netzwerkvorrichtung 10 eine Funkschnittstelle (nicht gezeigt) aufweisen, so dass Sensorsignale drahtlos und über Funk an die nächstgelegene Netzwerkvorrichtung oder gar über mehrere Netzwerkvorrichtungen 10 hinweg übertragen werden können. Die Funkschnittstelle kann auch ein Fehlersignal an eine bodeninstallierte Schnittstelle automatisch weiterleiten, z.B. in dem Fall, in dem die ordnungsgemäße Funktionalität der Netzwerkvorrichtung 10 nicht mehr gewährleistet ist. Die Funkschnittstelle hat darüber hinaus den Vorteil, dass sie einen protokollierten Datenaustausch, beispielweise mit Hilfe eines ZIGBEE-Protokolls ermöglicht, das unabhängig von dem in der bodenseitig installierten Infrastruktur verwendeten Protokoll ist. Ebenso ist es denkbar, die Netzwerkvorrichtung 10 mit einem GPS-Modul auszustatten, um eine nicht mehr ordnungsgemäße funktionale Netzwerkvorrichtung 10 leichter orten zu können.

Wie bereits voranstehend erwähnt, können sämtliche elektrischen Module der Netzwerkvorrichtung 10 ihre für den Betrieb benötigte Energie von zumindest einer der Energiegewinnungseinrichtungen 14.1, 14.2, 14.3 beziehen. Bei Ausfall oder nicht hinreichender Leistung der Energiegewinnungseinrichtungen 14.1, 14.2, 14.3 wird zusätzliche Energie von dem Akkumulator 16 bereitgestellt. In der Fig. 1 nicht gezeigt, kann ebenso mindestens eine Solarzelle an einer äußeren Oberfläche der Netzwerkvorrichtung 10 angeordnet sein, die den Akkumulator 16 auflädt.

Zur Überwachung des Zustandes und/oder der ordnungsgemäßen Funktionalität der Oberleitung 1 dienen sowohl die Sensoren 20 als auch in der Fig. 1 nicht gezeigte und an der Oberleitung 1 selbst angeordnete (erste) Sensoren. Die Sensoren 20 können ausgewählt sein aus der Gruppe bestehend aus einem Temperatursensor, einem Beschleunigungssensor, einem Abstandssensor und einem Kollisionssensor. Des Weiteren können die auf der Oberleitung 1 befestigten Sensoren ausgewählt sein aus der Gruppe bestehend aus einem Sensor, der die mechanischen Spannung in der Oberleitung sensiert, einem Sensor zur Feststellung des Vereisungsgrades der Oberleitung, einem Weichenstellungssensor, einem Kollisionssensor, einem bildgebenden Sensor und einem optischen Sensor.

Die Sensorsignale der Sensoren 20 sowie diejenigen Sensorsignale, die von den auf der Oberleitung 1 befestigten Sensoren herrühren und den Schnittstellen 20 zugeführt werden, werden von dem in der Datenmanagementeinrichtung 18 untergebrachten Micro-Controller verarbeitet und dem Transceiver 12 (und/oder auch dem an dem gegenüberliegenden längsseitigen Ende oder Endabschnitt der Netzwerkvorrichtung 10 angeordneten Transceiver) zugeführt. Der Transceiver 12 leitet die Sensorsignale drahtlos an einen Transceiver 12 einer weiteren auf der Oberleitung 1 befestigten Netzwerkvorrichtung 10 (nicht gezeigt) weiter.

Durch die Kommunikation mehrerer Netzwerkvorrichtungen 10 untereinander und entlang der Oberleitung 1 entsteht ein Datennetzwerk, das einen ungehinderten Signalaustausch entlang der Oberleitung 1 gewährleistet. Dieses Datennetzwerk liefert sodann die Sensorsignale an eine Leitstelle oder an im Datennetzwerk befindliche Aktuatoren weiter, welche die Sensorsignale oder Ableitungen davon letztendlich verarbeitet bzw. auswertet.

Die Sendeleistung eines Transceivers 12 ist dabei so bemessen, dass der Ausfall einer Netzwerkvorrichtung 10 überbrückt werden kann. Die Sendeleistung hat also auch Einfluss auf den gewählten Abstand zwischen zwei entlang der Oberleitung 1 benachbarten Netzwerkvorrichtungen 10.

Sämtliche Komponenten der Netzwerkvorrichtung 10, wie beispielsweise der Transceiver 12, die Energiegewinnungseinrichtungen 14, die Datenmanagementeinrichtung 18, die Auswertungseinrichtung und/oder die Sensoren 20 (die beispielsweise auch den zumindest einen Zustandssensor aufweisen können) sind vorzugsweise modular aufgebaut, d. h. jede Komponente ist eine Einheit und weist insbesondere sein eigenes Gehäuse auf, das wiederum in einem Gehäuse der Netzwerkvorrichtung 10 aufgenommen und durch zu diesem Zweck geeignete Mittel mit diesem mechanisch verbunden ist. Auf diese Weise kann ein Austausch dieser Komponente ohne Ausbau der übrigen Komponenten und ohne langwierige Montagearbeiten erfolgen. Ebenso bietet der modulare Aufbau den Vorteil, dass die Netzwerkvorrichtung 10 mit gezielt ausgesuchten Komponenten bestückt werden kann, und zwar so, wie es der jeweilige Verwendungszweck erfordert. Weiter können aufgrund technischer Obsoleszenz notwendige Weiterentwicklungen und Ersatzteillieferungen kostengünstiger realisiert werden.

Durch die einfache Montage der Netzwerkvorrichtung 10 an der Oberleitung 1 und durch den modularen Aufbau wird ein kosteneffizientes Netzwerkmodul bzw. eine kosteneffiziente Netzwerkvorrichtung 10 bereitgestellt, das/die energieautark ist und Sensorsignale entlang der Oberleitung 1 ungehindert mit anderen an der Oberleitung 1 befestigten Netzwerkvorrichtungen 10 austauschen kann. Es wird also ein Datennetzwerk entlang der Oberleitung 1 aufgebaut, das keine infrastrukturseitig installierten Schnittstellen mehr beinhaltet, sondern vielmehr die ungehinderte Wegstrecke entlang der Oberleitung 1 für den Signalaustausch nutzt.

Ebenfalls sind in der Netzwerkvorrichtung 10 entsprechende Redundanzen vorgesehen, die dafür sorgen, dass bei Ausfall einer Netzwerkvorrichtung 10 nicht das gesamte Datennetz entlang der Oberleitung 1 zum Erliegen kommt. Selbst bei einem Spannungsabfall in der Oberleitung 1 oder gar einem Stromausfall kann auf Grund des vorzugsweise vorgesehenen Akkumulators 16 sowie der vorzugsweise vorgesehenen Solarzelle der energetische Betrieb der Netzwerkvorrichtung 10 aufrechterhalten werden.

Die Anordnung der einzelnen Komponenten der Netzwerkvorrichtung 10 ist nicht auf die in der Figur gezeigte Anordnung beschränkt. Insbesondere können einzelne oder mehrere der Komponenten nicht vorhanden sein und/oder zumindest eine weitere Komponente Teil der Netzwerkvorrichtung sein.

Darüber hinaus erkennt der Fachmann, dass auch Sensorsignale anderer Sensoren als derjenigen, die in dieser Beschreibung explizit genannt sind, mittels der Netzwerkvorrichtung 10 innerhalb des so aufgebauten Datennetzwerkes ausgetauscht werden können. Die vorstehende Beschreibung ist so zu verstehen, dass sämtliche Merkmale der Netzwerkvorrichtung 10 in beliebiger Kombination vorliegen können.

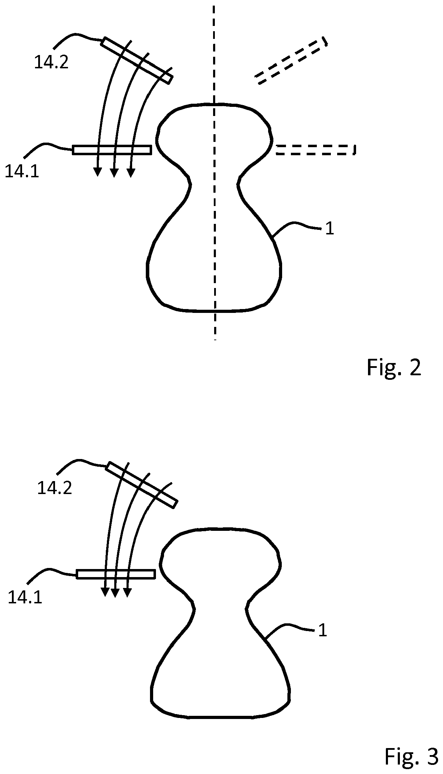

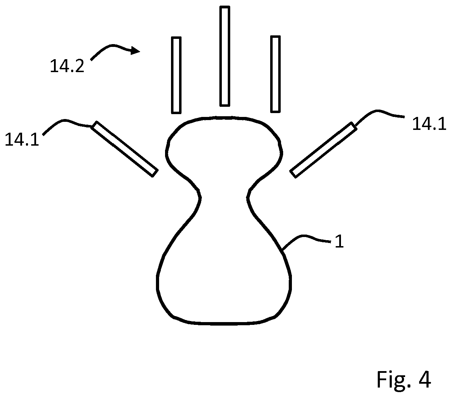

Die schematische Darstellung der Fig. 2 zeigt einen Fahrdraht der Oberleitung 1, insbesondere der in Fig. 1 dargestellten Oberleitung 1, im Querschnitt und zwei Energiegewinnungseinrichtung 14.1, 14.2, die zum Beispiel die Energiegewinnungseinrichtungen 14.1 und 14.2 aus Fig. 1 sind und die z.B. als Spulen ausgestaltet sind. Die Erfindung ist jedoch nicht auf Spulen beschränkt. Z.B. können auch andere Einrichtungen, in denen bei Änderung des magnetischen Flusses eine elektrische Spannung induziert wird, als Energiegewinnungseinrichtungen verwendet werden. Auch sind die Positionen der beiden Energiegewinnungseinrichtungen 14.1, 14.2 in Fig. 2 und Fig. 3 schematisch zu verstehen. Es sind lediglich zwei Positionen als Beispiel ausgewählt. Z.B. könnte sich die obere, zweite Energiegewinnungseinrichtung 14.2 genau oberhalb des Fahrdrahts befinden und/oder sich in der Art eines Dachs (wie die Energiegewinnungseinrichtung 14.3 in Fig. 1) entlang der gesamten Oberseite des Fahrdrahts erstrecken. Auf eine derartige Ausgestaltung einer Energiegewinnungseinrichtung wird noch anhand von Fig. 4 eingegangen. Auch können die Ausrichtungen der Energiegewinnungseinrichtungen 14.1, 14.2 anders als in Fig. 2 und Fig. 3 dargestellt gewählt werden. Die in Fig. 2 und Fig. 3 dargestellten Ausrichtungen sind so zu verstehen, dass die Energiegewinnungseinrichtungen 14.1, 14.2 bei sich änderndem magnetischen Fluss in Richtungen quer zur Längserstreckung des dargestellten länglichen Rechtecks eine induzierte Spannung aufweisen. Die in Fig. 2 und Fig. 3 dargestellten Pfeile sind Beispiele für magnetische Feldlinien und verlaufen in solchen Richtungen durch die Energiegewinnungseinrichtungen 14.1, 14.2.

Die in Fig. 2, Fig. 3 und Fig. 4 dargestellten schematischen Querschnitte durch einen Fahrdraht und Energiegewinnungseinrichtungen zeigen, dass die verschiedenen Energiegewinnungseinrichtungen 14 in Umfangsrichtung um den Fahrdraht an unterschiedlichen Positionen angeordnet sind. Die Umfangsrichtung verläuft kreisförmig um einen nicht näher dargestellten Mittelpunkt des Fahrdrahts. Bei dem Mittelpunkt kann es sich zum Beispiel um den Massenschwerpunkt des Querschnitts handelt. Der Mittelpunkt kann zum Beispiel aber auch der Punkt auf der Symmetrieebene des Fahrdrahts an der schmalsten Stelle des Fahrdrahts sein, dort wo sich die Einschüchterung zwischen dem oberen und dem unteren Teil befindet. Die Position in der Umfangsrichtung kann zum Beispiel in Werten des Kreiswinkels angegeben werden. Zum Beispiel hat ein Punkt unterhalb des Fahrdrahts auf dessen vertikaler Symmetrieebene den Wert null und ein Punkt oberhalb des Fahrdrahts auf dessen vertikaler Symmetrieebene den Wert 180°. Die beiden in Fig. 2 und Fig. 3 dargestellten Energiegewinnungseinrichtungen 14.1, 14.2 liegen in diesem Fall zum Beispiel an Positionen in Umfangsrichtung bei 200 Grad in Bezug auf die zweite Energiegewinnungseinrichtung 14.2 und bei 260 Grad in Bezug auf die erste Energiegewinnungseinrichtung 14.1.

Die drei Pfeile, die in Fig. 2 dargestellt sind, entsprechen Abschnitten von jeweils einer magnetischen Feldlinie eines Magnetfeldes, das sich um den Fahrdraht der Oberleitung 1 herum erstreckt, wenn der Fahrdraht von elektrischem Strom durchflossen wird. Im Fall eines elektrischen Wechselstroms kehrt sich die Richtung der Feldlinien entsprechend der Richtung des elektrischen Stroms in jeder Periode zweimal um. Die Pfeile stellen daher lediglich Momentaufnahmen dar.

Die Dichte der Magnetfeldlinien, d.h. ihre Abstände zueinander, können als Darstellung der Magnetfeldstärke aufgefasst werden. In Fig. 2 ist die Magnetfeldstärke daher im Bereich der ersten Energiegewinnungseinrichtung 14.1 etwas größer als im Bereich der zweiten Energiegewinnungseinrichtung 14.2. Da im Fall eines Wechselstroms durch den Fahrdraht sich der magnetische Fluss, d.h. auch die Feldstärke, mit der Frequenz des Wechselstroms ändert, ist die Dichte der Magnetfeldlinien auch ein Maß für die während jeder Periode auftretende Änderung der magnetischen Induktion und damit für die in der jeweiligen Energiegewinnungseinrichtung 14.1, 14.2 induzierte Spannung.

Der in Fig. 3 dargestellte Fahrdraht der Oberleitung 1 unterscheidet sich von dem in Fig. 2 dargestellten darin, dass im unteren Bereich des Fahrdrahts Material durch Abrieb entfernt wurde. Während des Betriebs von Fahrzeugen, deren Stromabnehmer an der unteren Oberfläche des Fahrdrahts entlang bewegt werden, entsteht ein solcher Abrieb, d.h. der Fahrdraht wird abgenutzt. Wie in Fig. 3 schematisch angedeutet, ändert sich dadurch der Verlauf der magnetischen Feldlinien.

Während die Feldlinien im Bereich der zweiten Energiegewinnungseinrichtung 14.2 etwa genauso weit auseinanderliegen wie im Fall der Fig. 2, liegen die Feldlinien im Bereich der ersten Energiegewinnungseinrichtung 14.1 deutlich näher beieinander. Der Grund dafür liegt darin, dass sich die erste Energiegewinnungseinrichtung 14.1 im Fall der Fig. 3 näher an der unteren Oberfläche des Fahrdrahts eins befindet als im Fall der Fig. 2.

Daher ist bei gleicher Stromstärke des elektrischen Stroms durch den Fahrdraht im Vergleich der Fälle von Fig. 2 und Fig. 3 die in der zweiten Energiegewinnungseinrichtung 14.2 induzierte Spannung etwa gleich groß wie im Fall der Fig. 2 und die in der ersten Energiegewinnungseinrichtung 14.1 induzierte Spannung deutlich größer als im Fall der Fig. 2. Durch Auswertung der induzierten Spannungen kann daher die Abnutzung des Fahrdrahts ermittelt werden. Dabei ist es losgelöst von dem konkreten Ausführungsbeispiel der Fig. 2 und Fig. 3 insbesondere möglich, die Tatsache zu ermitteln, dass der Fahrdraht abgenutzt ist, ist es möglich Stufen oder Bereiche der Abnutzung zu ermitteln und/oder ist es möglich, den Grad der Abnutzung kontinuierlich festzustellen.

Der in Fig. 2 und Fig. 3 teilweise dargestellte Verlauf von Magnetfeldlinien ist lediglich schematisch zu verstehen. Der wahre Verlauf der Magnetfeldlinien, die geschlossen um den Fahrdraht herum verlaufen, weicht von dem teilweise in Fig. 2 und Fig. 3 dargestellten Verlauf ab. Unberührt davon bleibt die Tatsache, dass insbesondere dann, wenn zumindest zwei induktive Energiegewinnungseinrichtungen im Verlauf der Magnetfeldlinien an unterschiedlichen Positionen angeordnet sind, die Abnutzung des Fahrdrahts aus den induzierten Spannungen ermittelt werden kann. Lediglich wenn die zwei induktiven Energiegewinnungseinrichtungen an Positionen entlang des Verlaufs der Magnetfeldlinien angeordnet werden, die immer, unabhängig vom Abnutzungsgrad gleichgroße Magnetfeldstärken bzw. Änderungen des magnetischen Flusses aufweisen, kann die Abnutzung nicht ermittelt werden. Eine solche nicht geeignete Anordnung zweier Energiegewinnungseinrichtungen ist dann vorhanden, wenn bezogen auf den in Fig. 2 und Fig. 3 dargestellten Querschnitt des Fahrdrahtes die beiden Energiegewinnungseinrichtungen gleichartig sind und bezüglich der senkrechten Mittelebene an symmetrischen Positionen bei symmetrischer Ausrichtung angeordnet sind, wie dies für die beiden Energiegewinnungseinrichtungen 14.1, 14.2 jeweils durch ein entsprechendes gestrichelt dargestelltes Rechteck in Fig. 2 angedeutet ist. Die senkrechte Mittelebene ist ebenfalls durch eine gestrichelte Linie dargestellt.

Fig. 4 zeigt schematisch einen Teil der Anordnung von Energiegewinnungseinrichtungen 14.1 und 14.2 wie in Fig. 1. Eine erste Energiegewinnungseinrichtung 14.1 weist zwei Spulen auf, die bezüglich der senkrechten Mittelebene des Fahrdrahts 1 symmetrisch zueinander angeordnet sind. Die Spulen können zum Beispiel elektrisch parallel oder in Reihe geschaltet sein/werden. Eine zweite Energiegewinnungseinrichtung 14.2 weist drei Spulen auf, die bezüglich der senkrechten Mittelebene (Symmetrieebene) des Fahrdrahts 1 symmetrisch zueinander angeordnet sind. Die Spulen können zum Beispiel elektrisch parallel oder in Reihe geschaltet werden. Die drei schmalen Rechtecke, die die Energiegewinnungseinrichtung 14.2 in Fig. 4 darstellen, können jedoch auch als Windungen derselben Spule verstanden werden. In diesem Fall erstreckt sich die Spule der zweiten Energiegewinnungseinrichtung 14.2 in über den Bereich in Umfangsrichtung, in dem die drei schmalen Rechtecke gezeichnet sind.

Alle Anordnungen von Energiegewinnungseinrichtungen in den Fig.1 bis 4 können durch gleich wirkende Anordnungen ersetzt werden, die entstehen, wenn zumindest eine Spule und/oder zumindest eine der Energiegewinnungseinrichtungen in Längsrichtung des Fahrdrahts 1, d. h. senkrecht zur Bildebene in Fig. 2, 3 oder 4 verschoben positioniert ist. Die verschiedenen Energiegewinnungseinrichtungen müssen daher nicht in demselben Längsabschnitt des Fahrdrahts angeordnet sein und müssen auch nicht in bezüglich der Längsrichtung des Fahrdrahts einander überlappenden Bereichen angeordnet sein. Dem liegt der Gedanke zugrunde, dass bei ungefähr konstantem Querschnitt des Fahrdrahts im Verlauf von dessen Längserstreckung das Magnetfeld in jeder Querschnittsebene des Fahrdrahts gleich ist. Alternativ oder zusätzlich ist es möglich, dass dieselbe Energiegewinnungseinrichtung Spulen in verschiedenen Längsabschnitten entlang des Fahrdrahts aufweist. Zum Beispiel sind diese Spulen elektrisch parallel oder in Reihe geschaltet.

Bei der in Fig. 4 dargestellten Anordnung von zwei Energiegewinnungseinrichtungen 14.1 und 14.2 ist die erste Energiegewinnungseinrichtung 14.1 näher an der Unterseite des Fahrdrahts 1 angeordnet als die zweite Energiegewinnungseinrichtung 14.2. Daher wird eine Abnutzung des Fahrdrahts 1 an dessen Unterseite zu einer stärkeren Veränderung des Magnetfelds im Bereich der ersten Energiegewinnungseinrichtung 14.1 führen als im Bereich der zweiten Energiegewinnungseinrichtung 14.2.

Fig. 5 zeigt schematisch eine Ausgestaltung einer dritten Energiegewinnungseinrichtung 14.3, beispielsweise der in Fig. 1 dargestellten dritten Energiegewinnungseinrichtung 14.3, welche sich dachförmig über die Oberseite des Fahrdrahtes der Oberleitung 1 erstreckt, wobei ebenfalls schematisch angedeutet auf beiden Seiten der senkrechten Mittelebene jeweils ein Bereich der zweiten Energiegewinnungseinrichtung 14.3 wangenartig etwa senkrecht nach unten verläuft. Daher verläuft auch die wirksame Querschnittsfläche der seitlichen Bereiche senkrecht von oben nach unten in der Darstellung der Fig. 5. Alternativ können die seitlichen Bereiche jedoch eine wirksame Querschnittsfläche aufweisen, die in der Darstellung der Fig. 5 einen anderen Winkel zu dem mittleren Bereich der Energiegewinnungseinrichtung aufweist.

In dem gezeigten Ausführungsbeispiel weist die dritte Energiegewinnungseinrichtung 14.3 eine einzige elektrische Leitung auf, die entsprechend den beiden Seitenwangen 35, 37 und dem horizontalen, dachflächenartigen Bereich 36 drei Spulen bildet. Der Verlauf der elektrischen Leitung 39 ist durch eine Vielzahl von Pfeilen angedeutet. Dem Verlauf der Pfeile folgend beginnt die Leitung links unten in Fig. 5 und ist zunächst ein- bis zweimal um die Außenränder der linken Seitenwange 35 gewunden. Mit dem zweiten nach oben verlaufenden Abschnitt des Leiters 39 geht dieser in die Spule im oberen Bereich 36 über. Nach dem zweiten nach rechts verlaufenden Abschnitt im oberen Bereich 36 geht der elektrische Leiter 39 in die Spule der rechten Seitenwange 37 über. Auch dort läuft der elektrische Leiter 39 ein- bis zweimal um die Außenränder der Seitenwange 37 herum. Die Anzahl der Windungen in jedem der Bereiche 35, 36, 37 ist lediglich als Beispiel zu verstehen. In der Praxis werden für die seitlichen Wangen mehr Windungen bevorzugt, die aber in Fig. 5 nicht übersichtlich dargestellt werden können. Dagegen wird für den mittleren, oberen Bereich 36 bevorzugt, dass sich dort weniger Windungen befinden. Zum Beispiel kann der Bereich 36 lediglich eine einzige Verbindungsleitung zwischen den seitlichen wangenartigen Bereichen aufweisen und somit keinerlei Windung.

Eine Energiegewinnungseinrichtung 14.3 wie in Fig. 5 schematisch dargestellt hat den Vorteil, dass zwei Seitenwangen vorhanden sind, durch die die hindurchtretenden Magnetfeldlinien bei Änderung des Magnetfelds zu einer induzierten Spannung führen. Aufgrund der zwei Spulen entsprechend den zwei Seitenwangen ist die induzierte Spannung gegenüber einer einzelnen Spule erhöht. Die induzierte Spannung ist daher nicht nur gut messbar, sondern führt auch zu einer erhöhten elektrischen Leistung, die die Energiegewinnungseinrichtung 14.3 durch magnetische Induktion bereitstellen kann.

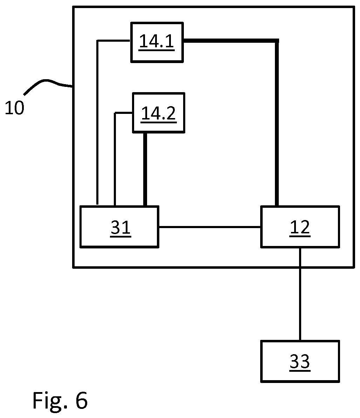

Fig. 6 zeigt schematisch ein Ausführungsbeispiel der erfindungsgemäßen Anordnung mit einer Netzwerkvorrichtung 10, bei der es sich z.B. um die in Fig. 1 dargestellte Netzwerkvorrichtung 10 handeln kann. Die Netzwerkvorrichtung 10 weist zwei Energiegewinnungseinrichtungen 14.1, 14.2 auf, die beide elektrisch mit demselben Zustandssensor 31 verbunden sind. Der Zustandssensor 31, der beispielsweise durch die oben erwähnte Datenmanagementeinrichtung realisiert werden kann, kann z.B. in der Art eines Multiplexers die in die Energiegewinnungseinrichtungen 14.1, 14.2 induzierten Spannungen wiederholt nacheinander abfragen, d.h. messen. Alternativ kann für jede der Energiegewinnungseinrichtungen 14.1, 14.2 ein separater Zustandssensor vorhanden sein.

Der Zustandssensor 31 ist zur Übertragung von Signalen mit einem Transceiver 12 der Netzwerkvorrichtung 10 verbunden, bei dem es sich z.B. um den im Vordergrund der in Fig. 1 dargestellten Transceiver 12 handeln kann. Der Transceiver 12 wird in dem Ausführungsbeispiel von der ersten Energiegewinnungseinrichtung 14.1 mit elektrischer Energie für seinen Betrieb versorgt. Der Zustandssensor 31 wird in dem Ausführungsbeispiel von der zweiten Energiegewinnungseinrichtung 14.2 mit elektrischer Energie für seinen Betrieb versorgt.

Ferner weist die Anordnung eine Auswertungseinrichtung 33 auf, die in dem Ausführungsbeispiel außerhalb der Netzwerkvorrichtung 10 liegend angeordnet ist. Dies bedeutet, dass die von dem Zustandssensor 31 erzeugten Signale entsprechend den in den Energiegewinnungseinrichtungen 14.1, 14.2 induzierten Spannungen über den Transceiver 12 aus der Netzwerkvorrichtung 10 heraus übertragen werden und z.B. über zahlreiche weitere Netzwerkvorrichtungen an demselben Fahrdraht zu einer Leitstelle übertragen werden, in der sich die Auswertungseinrichtung 33 befindet. Alternativ kann die Auswertungseinrichtung innerhalb der Netzwerkvorrichtung 10 oder innerhalb einer anderen Netzwerkvorrichtung entlang dem Fahrdraht angeordnet sein. Auch ist es möglich, eine solche Auswertungseinrichtung an einem Oberleitungsmast, der die Oberleitung trägt, anzuordnen. In jedem Fall ermöglicht die Auswertungseinrichtung eine Bestimmung des Abnutzungsgrades des Fahrdrahtes aus den vom Zustandssensor 31 erzeugten Signalen. Nicht nur in dem Ausführungsbeispiel der Fig. 5 wird es bevorzugt, dass der Zustandssensor 31 oder die Anordnung von Zustandssensoren die induzierte Spannung in allen Energiegewinnungseinrichtungen der Netzwerkvorrichtung wiederholt, z.B. entsprechend einer Taktrate, misst und entsprechende Signale erzeugt und ausgibt. Dies ermöglicht es insbesondere quasi kontinuierlich den Abnutzungszustand des Fahrdrahts zu ermitteln. Um Energie zu sparen, kann die Taktrate im Vergleich zur Computertechnik sehr gering gewählt sein. Z.B. kann der Zustandssensor oder die Anordnung von Zustandssensoren die induzierten Spannungen lediglich einmal pro Stunde oder einmal pro Tag messen und die entsprechenden Signale erzeugen und ausgeben. Noch kleinere Taktraten sind möglich. Eine kleine Taktrate ist auf die lediglich langsam stattfindende Abnutzung von Fahrdrähten angepasst. Alternativ zu einer Taktrate kann die Messung der induzierten Spannungen durch den Zustandssensor oder die Anordnung von Zustandssensoren von einer Steuerung ausgelöst werden. Eine solche Steuerung kann sich innerhalb der Netzwerkvorrichtung oder innerhalb der Anordnung befinden. Alternativ oder zusätzlich kann ein Steuersignal von außen in die Anordnung übertragen werden, z.B. von einer Leitstelle eines Streckennetzes. Hierzu kann eine Steuersignal-Übertragungsstrecke benutzt werden, die über den zumindest einen Transceiver der Netzwerkvorrichtung verläuft. Dabei kann es sich um denselben oder um einen anderen Transceiver handeln als der Transceiver, über den der Zustandssensor oder die Anordnung von Zustandssensoren die von ihnen erzeugten Signale aus der Netzwerkvorrichtung heraus überträgt.

Insbesondere kann es sich bei dem Zustandssensor oder der Mehrzahl von Zustandssensoren um die in Fig. 1 mit dem Bezugszeichen 20 bezeichneten Sensoren handeln, die Teil der Netzwerkvorrichtung 10 sind.

## Patentansprüche

1. Anordnung mit einer Netzwerkvorrichtung (10), die zur Befestigung an einem Fahrdraht einer stromdurchflossenen Oberleitung (1) ausgebildet ist, wobei:
• die Netzwerkvorrichtung (10) mindestens eine induktive Energiegewinnungseinrichtung (14) aufweist, die beim bestimmungsgemäßen Gebrauch der Netzwerkvorrichtung (10) relativ zu der Oberleitung (1) so angeordnet und ausgebildet ist, dass aus der induzierten Spannung und dem daraus resultierenden Induktionsstrom Energie für den elektrischen Betrieb der Netzwerkvorrichtung (10) gewinnbar ist, und
• die Anordnung mindestens einen Transceiver (12) aufweist, der ausgebildet ist, Signale von zumindest einem Sensor, der Betriebs- und/oder Zustandsparameter der Oberleitung (1) und/oder des/der der Oberleitung (1) zugeordneten Schienenweges und/oder Straße zu erzeugen, zu empfangen und an einen weiteren Transceiver, der nicht Teil der Anordnung ist, zu senden, wobei der mindestens eine Transceiver (12) der Anordnung elektrisch mit der mindestens einen induktiven Energiegewinnungseinrichtung (14) verbunden ist und daher beim bestimmungsgemäßen Gebrauch der Anordnung mit Energie von der mindestens einen induktiven Energiegewinnungseinrichtung (14) versorgbar ist,
**dadurch gekennzeichnet, dass**
• die Netzwerkvorrichtung (10) zumindest zwei der induktiven Energiegewinnungseinrichtungen (14.1, 14.2) aufweist, wobei die zumindest zwei induktiven Energiegewinnungseinrichtungen (14.1, 14.2) beim bestimmungsgemäßen Gebrauch der Netzwerkvorrichtung (10) an unterschiedlichen Positionen bezüglich einer Umfangsrichtung um die Oberleitung angeordnet sind und/oder unterschiedliche wirksame Querschnittsflächen aufweisen und/oder so angeordnet sind, dass das Magnetfeld des Fahrdrahts in ihnen unterschiedlich große elektrische Spannungen induziert, und
• die Anordnung zumindest einen Zustandssensor (31) oder eine Anordnung von Zustandssensoren aufweist, der/die elektrisch mit den zumindest zwei induktiven Energiegewinnungseinrichtungen (14.1, 14.2) verbunden ist und ausgebildet ist, Signale zu erzeugen, die jeweils einem elektrischen Betriebszustand der zumindest zwei induktiven Energiegewinnungseinrichtungen (14.1, 14.2) entsprechen.

2. Anordnung nach Anspruch 1, wobei der Zustandssensor (31) oder die Anordnung von Zustandssensoren mit dem Transceiver (12) oder einem der Transceiver (12) verbunden ist, sodass die Signale von dem Transceiver (12) empfangbar sind.

3. Anordnung nach Anspruch 1 oder 2, wobei die Anordnung eine Auswertungseinrichtung (33) aufweist, die mit dem Zustandssensor (31) oder der Anordnung von Zustandssensoren verbunden ist und ausgestaltet ist, aus den Signalen entsprechend den elektrischen Betriebszuständen der zumindest zwei induktiven Energiegewinnungseinrichtungen (14.1, 14.2) eine Zustandsgröße zu ermitteln, die einem Abnutzungszustand des Fahrdrahtes der stromdurchflossenen Oberleitung (1) entspricht.

4. Anordnung nach einem der vorhergehenden Ansprüche, wobei ein erster Transceiver (12) an einem ersten längsseitigen Endabschnitt der Netzwerkvorrichtung (10) angeordnet ist und ein zweiter Transceiver (12) an einem dem ersten Endabschnitt gegenüberliegenden zweiten längsseitigen Endabschnitt der Netzwerkvorrichtung (10) angeordnet ist.

5. Anordnung nach Anspruch 3 und 4, wobei die Auswertungseinrichtung zwischen dem ersten und dem zweiten Transceiver (12) angeordnet ist.

6. Anordnung nach einem der vorhergehenden Ansprüche, wobei die Netzwerkvorrichtung (10) modular aufgebaut ist dahingehend, dass der mindestens eine Transceiver (12) und die zumindest zwei induktiven Energiegewinnungseinrichtungen (14.1, 14.2) lösbar mit einem Gehäuse der Netzwerkvorrichtung (10) verbunden sind und durch entsprechende andere Netzwerkvorrichtungskomponenten ausgetauscht werden können.

7. Anordnung nach einem der vorhergehenden Ansprüche, mit einer Funkschnittstelle für eine Funksignalübertragung von dem zumindest einen Sensor, der Betriebs- und/oder Zustandsparameter der Oberleitung (1) und/oder des/der der Oberleitung (1) zugeordneten Schienenweges und/oder Straße erzeugt, zu dem Transceiver (12) oder zu zumindest einem der Transceiver (12) der Anordnung.

8. Verfahren zum Betreiben einer Anordnung mit einer Netzwerkvorrichtung (10), die zur Befestigung an einem Fahrdraht einer stromdurchflossenen Oberleitung (1) ausgebildet ist, wobei:
• als Teil der Netzwerkvorrichtung (10) mindestens eine induktive Energiegewinnungseinrichtung (14) betrieben wird, die aus der induzierten Spannung und dem daraus resultierenden Induktionsstrom Energie für den elektrischen Betrieb der Netzwerkvorrichtung (10) gewinnt, und
• als Teil der Anordnung mindestens ein Transceiver (12) betrieben wird, der Signale von zumindest einem Sensor, der Betriebs- und/oder Zustandsparameter der Oberleitung (1) und/oder des/der der Oberleitung (1) zugeordneten Schienenweges und/oder Straße erzeugt, empfängt und an einen weiteren Transceiver, der nicht Teil der Anordnung ist, drahtlos sendet, wobei der mindestens eine Transceiver (12) der Anordnung mit elektrischer Energie von der mindestens einen induktiven Energiegewinnungseinrichtung (14) versorgt wird,
**dadurch gekennzeichnet, dass**
• als Teil der Netzwerkvorrichtung (10) zumindest zwei der induktive Energiegewinnungseinrichtungen (14.1, 14.2) betrieben werden, wobei die zumindest zwei induktiven Energiegewinnungseinrichtungen (14.1, 14.2) an unterschiedlichen Positionen bezüglich einer Umfangsrichtung um die Oberleitung angeordnet sind und/oder unterschiedliche wirksame Querschnittsflächen aufweisen und/oder so angeordnet sind, dass das Magnetfeld des Fahrdrahts in ihnen unterschiedlich große elektrische Spannungen induziert, und
• als Teil der Anordnung zumindest ein Zustandssensor oder eine Anordnung von Zustandssensoren betrieben wird, der/die elektrisch mit den zumindest zwei induktiven Energiegewinnungseinrichtungen (14.1, 14.2) verbunden ist und Signale erzeugt, die jeweils einem elektrischen Betriebszustand der zumindest zwei induktiven Energiegewinnungseinrichtungen (14.1, 14.2) entsprechen.

9. Verfahren nach Anspruch 8, wobei der Zustandssensor oder die Anordnung von Zustandssensoren die Signale zu dem Transceiver (12) oder zu einem der Transceiver (12) der Anordnung überträgt.

10. Verfahren nach Anspruch 8 oder 9, wobei aus den Signalen entsprechend den elektrischen Betriebszuständen der zumindest zwei induktiven Energiegewinnungseinrichtungen (14.1, 14.2) eine Zustandsgröße ermittelt wird, die einem Abnutzungszustand des Fahrdrahtes der stromdurchflossenen Oberleitung (1) entspricht.

11. Verfahren nach einem der Ansprüche 8 bis 10, wobei die Netzwerkvorrichtung (10) als modular aufgebaute Netzwerkvorrichtung betrieben wird, bei der der mindestens eine Transceiver (12) und die zumindest zwei induktiven Energiegewinnungseinrichtungen (14.1, 14.2) lösbar mit einem Gehäuse der Netzwerkvorrichtung (10) verbunden sind und durch entsprechende andere Netzwerkvorrichtungskomponenten ausgetauscht werden.

12. Verfahren nach einem der Ansprüche 8 bis 11, wobei Funksignale von dem zumindest einen Sensor, der Betriebs- und/oder Zustandsparameter der Oberleitung (1) und/oder des/der der Oberleitung (1) zugeordneten Schienenweges und/oder Straße erzeugt, zu dem Transceiver (12) oder zu zumindest einem der Transceiver (12) der Anordnung übertragen werden.

## Claims

1. An arrangement having a network device (10) that is designed for fixing to a contact wire of a current-carrying overhead line (1), wherein:
• the network device (10) has at least one inductive energy generating device (14) that, when the network device (10) is used properly, is arranged and embodied relative to the overhead line (1) such that energy for electrically operating the network device (10) is generated from the induced voltage and the resultant induction current, and,
• the arrangement has at least one transceiver (12) that is embodied to receive signals from at least one sensor that to generate operating and/or status parameters of the overhead line (1) and/or of the track system and/or street associated with the overhead line (1) and to transmit the signals to a further transceiver that is not a part of the arrangement, wherein the at least one transceiver (12) of the arrangement is electrically connected to the at least one inductive energy generating device (14) and is therefore be supplied with energy by the at least one inductive energy generating device when the arrangement is used properly,
**characterized in that**
• the network device (10) has at least two of the inductive energy generating devices (14.1, 14.2), wherein the at least two inductive energy generating devices (14.1, 14.2), when the network device (10) is used properly, are arranged at different positions with respect to a circumferential direction around the overhead line and/or have different effective cross-sectional surface areas, and/or are arranged such that the magnetic field of the contact wire induces in them electrical voltages of different magnitude, and,
• the arrangement has at least one status sensor (31), or an arrangement of status sensors, that is electrically connected to the at least two inductive energy generating devices (14.1, 14.2) and is embodied to generate signals that each correspond to an electrical operating status of the at least two inductive energy generating devices (14.1, 14.2).

2. The arrangement according to claim 1, wherein the status sensor (31), or the arrangement of status sensors, is connected to the transceiver (12) or to one of the transceivers (12) such that the signals may be received by the transceiver (12).

3. The arrangement according to claim 1 or 2, wherein the arrangement has an evaluating device (33) that is connected to the status sensor (31) or the arrangement of status sensors and is designed to determine, from the signals corresponding to the electrical operating statuses of the at least two inductive energy generating devices (14.1, 14.2), a status quantity that corresponds to a wear status of the contact wire of the current-carrying overhead line (1).

4. The arrangement according to any of the preceding claims, wherein a first transceiver (12) is arranged at a first longitudinal end section of the network device (10) and a second transceiver (12) is arranged at a second longitudinal end section of the network device (10) opposing the first end section.

5. The arrangement according to claim 3 and 4, wherein the evaluating device is arranged between the first and second transceiver (12).

6. The arrangement according to any of the preceding claims, wherein the network device (10) is constructed modularly such that the at least one transceiver (12) and the at least two inductive energy generating devices (14.1, 14.2) are detachably connected to a housing of the network device (10) and may be exchanged for corresponding other network device components.

7. The arrangement according to any of the preceding claims, having a wireless interface for wireless signal transmission from the at least one sensor that generates operating and/or status parameters of the overhead line (1) and/or of the track system and/or street associated with the overhead line (1) to the transceiver (12) or to at least one of the transceivers (12) of the arrangement.

8. A method for operating an arrangement having a network device (10) that is designed for fixing to a contact wire of a current-carrying overhead line (1), wherein:
• as part of the network device (10) at least one inductive energy generating device (14) is operated that generates energy for electrically operating the network device (10) from the induced voltage and the resultant induction current, and
• as part of the arrangement at least one transceiver (12) is operated that receives signals from at least one sensor that to generate operating and/or status parameters of the overhead line (1) and/or of the track system and/or street associated with the overhead line (1) and wirelessly transmits them to another transceiver that is not part of the arrangement, wherein the at least one transceiver (12) of the arrangement is supplied with electrical energy by the at least one inductive energy generating device (14),
**characterized in that**
• at least two of the inductive energy generating devices (14.1, 14.2) are operated as part of the network device (10), wherein the at least two inductive energy generating devices (14.1, 14.2) are arranged at different positions with respect to a circumferential direction around the overhead line and/or have different effective cross-sectional surface areas, and/or are arranged such that the magnetic field of the contact wire induces in them electrical voltages of different magnitude, and,
• at least one status sensor, or one arrangement of status sensors, is operated as part of the arrangement and is electrically connected to the at least two inductive energy generating devices (14.1, 14.2) and generates signals that each correspond to an electrical operating status of the at least two inductive energy generating devices (14.1, 14.2).

9. The method according to claim 8, wherein the status sensor, or the arrangement of status sensors, transmits the signals to the transceiver (12) or to one of the transceivers (12) of the arrangement.

10. The method according to claim 8 or 9, wherein, from the signals corresponding to the electrical operating statuses of the at least two inductive energy generating devices (14.1, 14.2), a status quantity is determined that corresponds to a wear status of the contact wire of the current-carrying overhead line (1).

11. The method according to any of claims 8 through 10, wherein the network device (10) is operated as a modularly constructed network device in which the at least one transceiver (12) and the at least two inductive energy generating devices (14.1, 14.2) are detachably connected to a housing of the network device (10) and are exchanged for corresponding other network device components.

12. The method according to any of claims 8 through 11, wherein wireless signals from the at least one sensor that generates operating and/or status parameters of the overhead line (1) and/or of the track system and/or street associated with the overhead line (1) are transmitted to the transceiver (12) or to at least one of the transceivers (12) of the arrangement.

## Revendications

1. Ensemble avec un dispositif de réseau (10), qui est réalisé pour être fixé au niveau d'un fil de contact d'une ligne aérienne (1) traversée par un courant, dans lequel :
- le dispositif de réseau (10) présente au moins un système d'obtention d'énergie (14) inductif, qui est disposé, lors de l'utilisation conforme à l'usage prévu du dispositif de réseau (10) par rapport à la ligne aérienne (1) et est réalisé de telle sorte que de l'énergie pour le fonctionnement électrique du dispositif de réseau (10) peut être obtenue à partir de la tension induite et du courant d'induction en résultant, et
- l'ensemble présente au moins un émetteur-récepteur (12), qui est réalisé pour générer des signaux, par au moins un capteur, des paramètres de fonctionnement et/ou d'état de la ligne aérienne (1) et/ou de la voie ferrée et/ou route associée à la ligne aérienne (1), pour les recevoir et les envoyer à un autre émetteur-récepteur, qui ne fait pas partie de l'ensemble, dans lequel l'au moins un émetteur-récepteur (12) de l'ensemble est relié de manière électrique à l'au moins un système d'obtention d'énergie (14) inductif et peut être alimenté par voie de conséquence, lors de l'utilisation conforme à l'usage prévu de l'ensemble, en énergie provenant de l'au moins un système d'obtention d'énergie (14) inductif, **caractérisé en ce que**
- le dispositif de réseau (10) présente au moins deux des systèmes d'obtention d'énergie (14.1, 14.2) inductifs, dans lequel les au moins deux systèmes d'obtention d'énergie (14.1, 14.2) inductifs sont disposés, lors de l'utilisation conforme à l'usage prévu du dispositif de réseau (10), au niveau de positions différentes par rapport à une direction périphérique autour de la ligne aérienne et/ou présentent différentes surfaces de section transversale actives et/ou sont disposés de telle sorte que le champ magnétique du fil de contact induit dans ceux-ci des tensions électriques de grandeurs différentes, et
- l'ensemble présente au moins un capteur d'état (31) ou un ensemble de capteurs d'état, qui est relié de manière électrique aux au moins deux systèmes d'obtention d'énergie (14.1, 14.2) inductifs et est réalisé pour générer des signaux, qui correspondent respectivement à un état de fonctionnement électrique des au moins deux systèmes d'obtention d'énergie (14.1, 14.2) inductifs.

2. Ensemble selon la revendication 1, dans lequel le capteur d'état (31) ou l'ensemble de capteurs d'état est relié à l'émetteur-récepteur (12) ou à un des émetteurs-récepteurs (12) si bien que les signaux peuvent être reçus par l'émetteur-récepteur (12).

3. Ensemble selon la revendication 1 ou 2, dans lequel l'ensemble présente un système d'évaluation (33), qui est relié au capteur d'état (31) ou à l'ensemble de capteurs d'état et est configuré pour déterminer à partir des signaux conformément aux états de fonctionnement électriques des au moins deux systèmes d'obtention d'énergie (14.1, 14.2) inductifs, une grandeur d'état, qui correspond à un état d'usure du fil de contact de la ligne aérienne (1) traversée par un courant.

4. Ensemble selon l'une quelconque des revendications précédentes, dans lequel un premier émetteur-récepteur (12) est disposé au niveau d'une première section d'extrémité côté longitudinal du dispositif de réseau (10) et un second émetteur-récepteur (12) est disposé au niveau d'une seconde section d'extrémité côté longitudinal, faisant face à la première section d'extrémité, du dispositif de réseau (10).

5. Ensemble selon les revendications 3 et 4, dans lequel le système d'évaluation est disposé entre le premier et le second émetteur-récepteur (12).

6. Ensemble selon l'une quelconque des revendications précédentes, dans lequel le dispositif de réseau (10) est fabriqué de manière modulaire en ce que l'au moins un émetteur-récepteur (12) et les au moins deux systèmes d'obtention d'énergie (14.1, 14.2) inductifs sont reliés de manière amovible à un boîtier du dispositif de réseau (10) et peuvent être remplacés par d'autres composants de dispositif de réseau correspondants.

7. Ensemble selon l'une quelconque des revendications précédentes, avec une interface radio pour une transmission de signaux radio, par l'au moins un capteur, des paramètres de fonctionnement et/ou d'état de la ligne aérienne (1) et/ou de la voie ferrée et/ou route associée à la ligne aérienne (1), à l'émetteur-récepteur (12) ou à au moins un des émetteurs-récepteurs (12) de l'ensemble.

8. Procédé servant à faire fonctionner un ensemble avec un dispositif de réseau (10), qui est réalisé pour être fixé au niveau d'un fil de contact d'une ligne aérienne (1) traversée par un courant, dans lequel :
- au moins un système d'obtention d'énergie (14) inductif, qui obtient à partir de la tension induite et du courant d'induction en résultant de l'énergie pour le fonctionnement électrique du dispositif de réseau (10), fonctionne en tant que partie du dispositif de réseau (10), et
- au moins un émetteur-récepteur (12), qui génère des signaux, par au moins un capteur, des paramètres de fonctionnement et/ou d'état de la ligne aérienne (1) et/ou de la voie ferrée et/ou route associée à la ligne aérienne (1), les reçoit et les envoie sans fil à un autre émetteur-récepteur, qui ne fait pas partie de l'ensemble, fonctionne en tant que partie de l'ensemble, dans lequel l'au moins un émetteur-récepteur (12) de l'ensemble est alimenté en une énergie électrique provenant de l'au moins un système d'obtention d'énergie (14) inductif, **caractérisé en ce que**
- au moins deux des systèmes d'obtention d'énergie (14.1, 14.2) inductifs fonctionnent en tant que partie du dispositif de réseau (10), dans lequel les au moins deux systèmes d'obtention d'énergie (14.1, 14.2) inductifs sont disposés au niveau de positions différentes par rapport à une direction périphérique autour de la ligne aérienne et/ou présentent différentes surfaces de section transversale actives et/ou sont disposés de telle sorte que le champ magnétique du fil de contact induit en ceux-ci des tensions électriques de grandeurs différentes, et
- au moins un capteur d'état ou un ensemble de capteurs d'état, qui est relié de manière électrique aux au moins deux systèmes d'obtention d'énergie (14.1, 14.2) inductifs et génère des signaux qui correspondent respectivement à un état de fonctionnement électrique des au moins deux systèmes d'obtention d'énergie (14.1, 14.2) inductifs, fonctionne en tant que partie de l'ensemble.

9. Procédé selon la revendication 8, dans lequel le capteur d'état ou l'ensemble de capteurs d'état transmet les signaux à l'émetteur-récepteur (12) ou à un des émetteurs-récepteurs (12) de l'ensemble.

10. Procédé selon la revendication 8 ou 9, dans lequel une grandeur d'état qui correspond à un état d'usure du fil de contact de la ligne aérienne (1) traversée par un courant est déterminée à partir des signaux conformément aux états de fonctionnement électriques des au moins deux systèmes d'obtention d'énergie (14.1, 14.2) inductifs.

11. Procédé selon l'une quelconque des revendications 8 à 10, dans lequel le dispositif de réseau (10) fonctionne en tant que dispositif de réseau fabriqué de manière modulaire, dans lequel l'au moins un émetteur-récepteur (12) et les au moins deux systèmes d'obtention d'énergie (14.1, 14.2) inductifs sont reliés de manière amovible à un boîtier du dispositif de réseau (10) et sont remplacés par d'autres composants de dispositif de réseau correspondants.

12. Procédé selon l'une quelconque des revendications 8 à 11, dans lequel des signaux radio des paramètres de fonctionnement et/ou d'état de la ligne aérienne (1) et/ou de la voie ferrée et/ou route associée à la ligne aérienne (1) sont générés par l'au moins un capteur, sont transmis à l'émetteur-récepteur (12) ou à au moins un des émetteurs-récepteurs (12) de l'ensemble.
